# EUROPEAN PATENT APPLICATION

(11) **EP 4 687 033 A1**
(43) Date of publication of application: **04.02.2026**
(21) Application number: 25192360.3
(22) Date of filing: 29.07.2025
(51) Int. Cl.: G06F 9/48, G06F 9/54

(54) **LOCK-FREE SCHEDULER QUEUE WITH BULK INSERTION**

(30) Priority: 30.07.2024 US 202418788797
(71) Applicant: SAP SE, 69190 Walldorf (DE)
(72) Inventor: Gottschlag, Mathias, 69190 Walldorf (DE); Opiela, Niklas, 69190 Walldorf (DE)
(74) Representative: Müller-Boré & Partner Patentanwälte PartG mbB

(57) **Abstract**

A system includes identification of a plurality of computing jobs associated with a same execution priority, determination of an insertion point for each one of a second plurality of queues of a second skiplist based on the execution priority, each of the second plurality of queues including a queue entry for at least one of a second plurality of computing jobs, generation of a first skiplist including a first plurality of queues, the first skiplist including one or more queue entries for each of the plurality of computing jobs, and insertion of each of the first plurality of queues of the first skiplist into a respective one of the second plurality of queues at a respective one of the determined insertion points.

## Description

### BACKGROUND

Modern computing systems receive requests at increasingly high rates. The rates at which requests are received will only grow as computing systems are more regularly deployed within cloud-based and/or multi-tenant architectures.

Computing systems use schedulers to orchestrate the processing of received requests. For example, in a database system, a scheduler receives work packets, or jobs, and adds the jobs to a queue based on the respective priorities of the jobs. Threads retrieve and execute jobs from the queue based on the priority-based order of the jobs within the queue.

A conventional scheduler may use a single scheduling queue. To manage queue contention, the single scheduling queue may only be accessed by a thread which holds a mutex or other synchronization primitive. As the number of available threads increases, wait times for accessing the queue may become a processing bottleneck. Alternatively, a scheduler may manage multiple scheduling queues (e.g., one per CPU core) where a thread of a CPU core may retrieve jobs only from the queue which is assigned to its CPU core. The multiple scheduling queues reduce contention but impact the ability to implement global job prioritization, because a high-priority job in one queue is ignored by threads which cannot retrieve jobs from the queue.

What is needed are systems which reduce processing bottlenecks resulting from current scheduling queue architectures. Such systems preferably provide an efficient job prioritization scheme which may be executed by multiple threads of multiple CPU cores without incurring substantial processing delays.

### BRIEF DESCRIPTION OF THE DRAWINGS

FIG. 1 is a block diagram of a system utilizing scheduler queues according to some embodiments.
FIG. 2A illustrates a lock-free skiplist including a plurality of queues and queue elements according to some embodiments.
FIG. 2B illustrates the lock-free skiplist of FIG. 2A after insertion of queue elements associated with a job according to some embodiments.
FIG. 2C illustrates the lock-free skiplist of FIG. 2B after deletion of queue elements associated with a job according to some embodiments.
FIG. 3 comprises a flow diagram to add jobs to a lock-free skiplist according to some embodiments.
FIG. 4 illustrates creation of jobs based on a received request according to some embodiments.
FIG. 5 illustrates a lock-free skiplist of jobs associated with a same priority according to some embodiments.
FIGS. 6A and 6B illustrate insertion of the FIG. 5A skiplist into the FIG. 2A skiplist according to some embodiments.
FIG. 7 illustrates a skiplist generated according to some embodiments.
FIGS. 8A and 8B illustrate reduction of skiplist queues according to some embodiments.
FIG. 9 is a block diagram of a non-uniform memory access architecture according to some embodiments.
FIG. 10 is a block diagram of a database system according to some embodiments.
FIG. 11 is a view of a cloud-based architecture according to some embodiments.

### DETAILED DESCRIPTION

The following description is provided to enable any person in the art to make and use the described embodiments. Various modifications will be readily apparent to those in the art.

Some embodiments provide a lock-free priority-driven job queue. This queue is structured as a skiplist, provides suitable global prioritization of jobs, and improves scalability over traditional mutex-based implementations.

Advantageously, embodiments provide lock-free bulk insertion of multiple jobs into a skiplist used by multiple threads (i.e., an "active" skiplist). In systems such as a database, incoming requests often result in simultaneous creation of multiple jobs having the same priority. Leveraging the fact that such jobs share the same insertion point in the active skiplist, embodiments generate a "sub" skiplist including the jobs and insert this sub skiplist into the active skiplist. Generation of the sub skiplist is performed in local memory of one thread and does not require access to the shared memory of the active skiplist. Accordingly, generation of the sub skiplist does not cause cache invalidations or affect other threads. Moreover, the sub skiplist, including multiple jobs, may be inserted into the active skiplist in the same lock-free and atomic manner which is otherwise employed to insert a single job into the active skiplist.

Some embodiments also or alternatively vary the height (i.e., the number of sub-lists, or queues) of the active skiplist. The present inventors have discovered that the runtime cost of the active skiplist increases with the number of skiplist queues, as more queues require more queue elements to be accessed and/or modified during insertion and removal of jobs. Therefore, the required number of queues depends on the number of jobs in the skiplist. In some embodiments, the number of queues in the skiplist is reduced when the number of jobs in the skiplist decreases below a threshold by deleting the queue elements in higher-level queues. Similarly, the number of queues is increased when the number of jobs in the skiplist increases beyond a threshold.

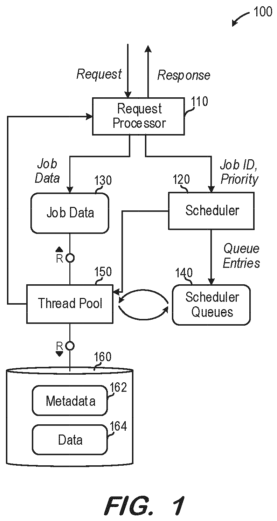

FIG. 1 is a block diagram of system 100 according to some embodiments. Each illustrated element of system 100 may be implemented using any suitable combination of computing hardware and/or software that is or becomes known. Such combinations may include on-premise servers, cloud-based servers, and/or elastically-allocated virtual machines. System 100 may comprise components of a standalone or distributed (i.e., multi-node) database system in some embodiments. Two or more elements of system 100 may be implemented by a single computing device. One or more elements of system 100 may be implemented as a cloud service (e.g., Software-as-a-Service, Platform-as-a-Service).

Request processor 110 receives requests. A request may comprise a database query or a request for another type of action which may be performed by system 100 (e.g., garbage collection, backup, statistics generation). According to some embodiments, request processor 110 is a component of a query processor which receives a query and generates a query execution plan and a pipeline execution order based on the received query.

Request processor 110 segments a received request into a plurality of different work packets (i.e., jobs). Request processor 110 also determines a job ID and an execution priority for each job. The jobs segmented from a single request may be associated with the same priority (e.g., all jobs are of priority 20) or with different priorities (e.g., one or more jobs are of priority 20, one or more other jobs are of priority 50, and one or more other jobs are of priority 5). Request processor 110 also generates job data needed to execute each job, and stores the job data in job data 130.

Scheduler 120 receives the job ID and the priority of each job from request processor 110. Scheduler 120 generates one or more queue entries for each job and places the queue entries in scheduler queues 140 based on the priorities of their respective jobs. Placement of queue entries into scheduler queues 140 according to some embodiments will be described in detail below. Scheduler queues 140 may simultaneously include queue entries associated with jobs of several different requests which were previously received by request processor 110. Scheduler queues 140 are queues of a skiplist according to some embodiments.

Scheduler queues 140 may be stored in shared memory accessible by multiple threads. The multiple threads may be threads of disparate CPU cores in some embodiments. The shared memory may comprise random-access memory, such as but not limited to DRAM, NVRAM, and Flash memory.

Thread pool 150 consists of available worker threads. By default, thread pool 150 includes one worker thread per logical CPU of system 100, but embodiments are not limited thereto. In some embodiments, the number of worker threads in the system is variable. For example, with the goals of maintaining high CPU utilization, a system may increase the total number of worker threads when, e.g., some threads sleep, wait for I/O, or perform other blocking system calls.

The threads of thread pool 150 retrieve queue entries of scheduler queues 140 based on their priority as will be described below. As illustrated, scheduler 120 may notify thread pool 150 in response to placement of new queue entries in scheduler queues 140.

Once a thread has retrieved a queue entry associated with a job from scheduler queue 140, the thread retrieves job data corresponding to the job from job data 130. The thread then executes the job based on the job data as is known in the art. Execution of the job may include reading and/or writing from/to data store 160.

Data store 160 may comprise any type of data storage system that is or becomes known. Data store 160 stores metadata 162 and data 164. Metadata 162 may comprise a database schema defining the structure and relationships of data stored in data 164. Data 164 may conform to any suitable formats, not limited to tabular data. Metadata 162 and data 164 may include metadata and data, respectively, of more than one tenant. This metadata and data may be physically, logically, and/or programmatically segregated to prevent one tenant from accessing the metadata or data of another tenant.

Threads of thread pool 150 return the results of executed jobs to request processor 110. As is known in the art, request processor 110 generates responses to received requests based on the results of execution of the jobs of the requests. The responses are then returned to the requesting component.

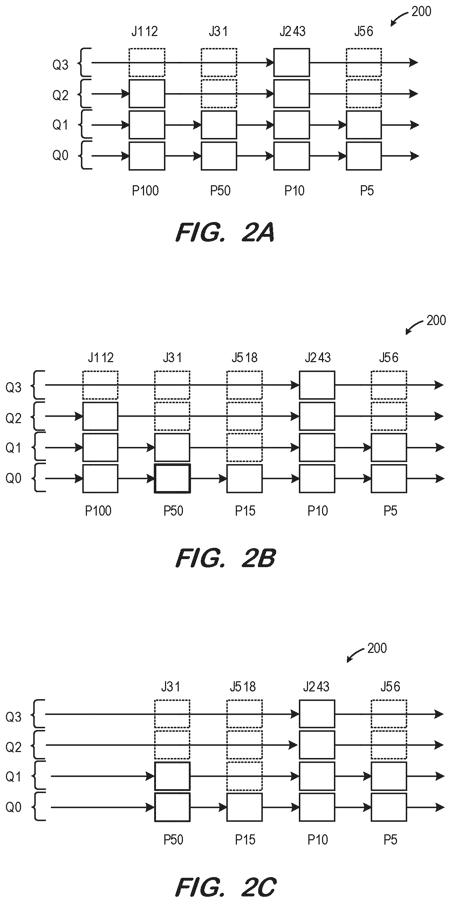

FIG. 2A illustrates skiplist 200 according to some embodiments. Skiplist 200 may comprise an implementation of scheduler queues 140 of FIG. 1. Skiplist 200 includes four queues Q0-Q3, but embodiments are not limited thereto. Each queue Q0-Q3 of skiplist 200 may include zero or more queue entries. Each queue entry of a queue includes a forward pointer to a next queue entry of the queue. Accordingly, each of queues Q0-Q3 is a linked list of queue entries. The solid rectangles of FIG. 2A represent queue entries which have been placed in respective queues, while the dashed rectangles depict memory which has been allocated for queue entries but which does not include a queue entry.

Skiplist 200 includes queue entries for jobs J112, J31, J243, and J56. Each vertical column of queue entries is associated with a single job. The queue entries of a job are inserted into skiplist 200 according to the priority of the job. The priority of job J31 is 50, so the queue entries of job J31 are inserted between the queue entries of job J112 (priority 100) and job J243 (priority 10).

Each queue entry represents a job and includes a job ID, a priority, a pointer to associated job data, and a forward pointer to a next queue entry. All queue entries of a given vertical column include the same job ID, the same priority, and the same pointer to associated job data. However, since each queue entry of a given vertical column belongs to a different queue, each queue entry of a given vertical column includes a forward pointer to a different next queue entry. For example, the queue entry for job J112 in queue Q2 points to the queue entry for job J243 in queue Q2, the queue entry for job J112 in queue Q1 points to the queue entry for job J31 in queue Q1, and the queue entry for job J112 in queue Q0 points to the queue entry for job J31 in queue Q0.

All queue entries of a given vertical column may be represented in some embodiments by a single queue entry including a job ID, a priority, a pointer to associated job data, and a forward pointer associated with each queue of the vertical column to which the job has been assigned.

The number of queue entries inserted into skiplist 200 for a given job (i.e., the height of the vertical column of queue entries representing the job) is variable. Generally, queue entries are inserted into skiplist 200 such that queue entry sparsity increases from the lowest queue (e.g., Q0) to the highest queue (e.g., Q3). This increasing sparsity facilitates fast determination of an insertion point for the queue entries of a new job.

For example, it is assumed that scheduler 120 receives job ID J518 representing a job having priority 15. Insertion of the job into skiplist 200 begins with examination of queue Q3. From left-to-right, the first queue interval of queue Q3 exists between a head entry (unshown) representing infinite priority and a queue entry for job J243, representing priority 10. Since job J518 has priority 15, it is determined to insert job J518 somewhere between infinite priority and job J243.

Queue Q2 is then examined between its head queue entry representing infinite priority and its queue entry representing job J243. The first encountered interval in queue Q2 is between the queue entry representing infinite priority and a queue entry representing job J112. Since the priority of Job J112 is 100 and the priority of job J518 is 15, it is determined that job J518 should not be inserted between the queue entry representing infinite priority and the queue entry representing job J112. The next encountered interval in queue Q2 is between the queue entry representing job J112 and the queue entry representing job J243. Since the priority of Job J112 is 100 and the priority of job J243 is 10, it is determined that job J518 should be inserted somewhere between the queue entry representing job J112 and the queue entry representing job J243.

Next, queue Q1 is examined between its queue entry representing job J112 and its queue entry representing job J243. The first encountered interval in queue Q1 is between the queue entry representing job J112 and the queue entry representing job J31. Since the priority of Job J112 is 100 and the priority of job J31 is 50, it is determined that job J518 should not be inserted between the queue entry representing job J112 and the queue entry representing job J31. The next encountered interval in queue Q1 is between the queue entry representing job J31 and the queue entry representing job J243. Since the priority of Job J31 is 50 and the priority of job J243 is 10, it is determined that job J518 should be inserted somewhere between the queue entry representing Job J31 and the queue entry representing job J243.

Queue Q0 is examined between its queue entry representing job J31 and its queue entry representing job J24. Since only one interval exists between these entries, it is determined to insert job J518 between the queue entries of job J31 and the queue entries of job J24. It should be noted that each queue also includes a tail entry representing a priority of zero.

Insertion of queue entries into skiplist 200 includes a determination of a number of queues in which queue entries should be inserted. According to some embodiments, a queue entry for a job is always inserted into the lower-most queue (i.e., Q0). Insertion of queue entries into the other queues may follow a pseudo-random weighted determination. For example, the determination may conform to a 50% chance of inserting a queue entry into queue Q1, a 25% chance of inserting a queue entry into queue Q2, and a 12.5% chance of inserting a queue entry into queue Q3. Also according to some embodiments, a queue entry may be inserted into a particular queue only if queue entries are also inserted in all queues located below the particular queue.

Continuing the above example, it may be determined to insert one queue entry corresponding to job J518 into skip list 200. Accordingly, the one queue entry is to be inserted in queue Q0 between the queue entry of job J31 and the queue entry of job J243. The queue entry is created including a job ID (i.e., J518), a priority (15), a pointer to corresponding job data, and a forward pointer to the location of the queue Q0 queue entry of job J243.

To insert the queue entry, the forward pointer of the queue Q0 queue entry which precedes the insertion point (i.e., the queue entry of job J31 represented by the bolded rectangle of FIG. 2B) is changed from the location of the queue Q0 queue entry of job J243 to the location of the queue Q0 queue entry of job J518. For example, the queue Q0 queue entry of job J31 is retrieved from its memory location, its forward pointer is changed as described above, and the changed queue entry is saved back to the memory location. These steps may occur atomically such that other threads accessing skip list 200 in parallel always observe a consistent list state.

During operation, an available thread of thread pool 150 typically selects a highest priority job from skiplist 200. This selection may cause deletion of the queue entries of the selected job from skiplist 200. FIG. 2C illustrates skiplist 200 after deletion of the queue entries of highest-priority job J112. Deletion of the queue entries of job J112 includes changing the pointer of the "infinite priority" queue entry of queue Q3 to the queue entry of job J243, the pointer of the infinite priority queue entry of queue Q2 to the queue entry of job J31, and the pointer of the infinite priority queue entry of queue Q1 to the queue entry of job J31.

According to some embodiments, deletion of a queue entry occurs in two phases. In a first logical deletion phase, a prior queue entry is marked to indicate that the next queue entry in the queue is to be deleted. Next, during a physical deletion phase, the pointer to the deleted entry in the prior queue entry is changed to the next undeleted entry in the queue. In view of the foregoing, insertion of a queue entry in a queue includes a determination of whether the prior queue entry in the queue has been marked for deletion. During insertion, logically-deleted entries are assumed to have infinite priority, so all insertions points are downstream from these entries.

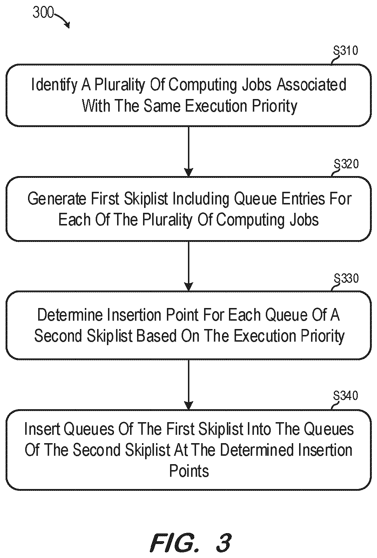

FIG. 3 comprises a flow diagram of process 300 according to some embodiments. In some embodiments, various hardware elements of system 100 execute program code to perform process 300. Process 300 and all other processes mentioned herein may be embodied in processor-executable program code read from one or more non-transitory computer-readable media, such as but not limited to a hard disk drive, a volatile or non-volatile random-access memory, a DVD-ROM, a Flash drive, and a magnetic tape, and which may be executed by one or more processing units, including but not limited to hardware processors, processor cores, and processor threads. Such processors, processor cores, and processor threads may be implemented by a virtual machine provisioned in a cloud-based architecture. In some embodiments, hard-wired circuitry may be used in place of, or in combination with, program code for implementation of processes according to some embodiments. Embodiments are therefore not limited to any specific combination of hardware and software.

Initially, at S310, a plurality of computing jobs associated with the same execution priority are identified. According to some embodiments, a request processor receives one or more requests and segments each of the one or more requests into one or more jobs. The jobs may be received by a job scheduler prior to S310, where each received job is identified by a respective job ID and a respective execution priority.

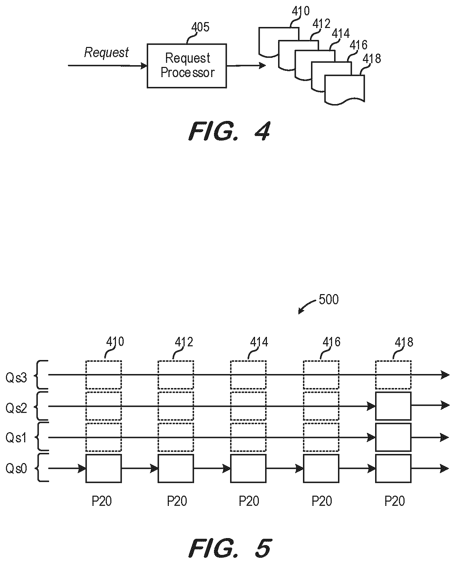

FIG. 4 illustrates reception of a request by request processor 405 according to some embodiments, Request processor 405 segments the request into five jobs 410-418, each of which is associated with job data, a job ID and an execution priority.

S310 may comprise determining that the received jobs include more than a threshold number of jobs associated with a same execution priority, and identifying each of the jobs which is associated with the same execution priority. In some embodiments, the jobs are received serially and S310 comprises identifying a number of consecutively-received jobs which are associated with a same execution priority and which exceed a threshold number of jobs.

A first skiplist is generated at S320. The first skiplist includes a plurality of queues, and each queue includes a queue entry for each of the jobs identified at S310.

FIG. 5 illustrates first skiplist 500 according to some embodiments. Skiplist 500 includes four queues Qs0-Qs3. The number of queues of the first skiplist may be equal to the number of queues of a currently-active skiplist (i.e., a skiplist being currently accessed by a thread pool as described above).

Each of queues Qs0-Qs3 includes one or more queue elements associated with each of jobs 410-418. As shown, each vertical column of queue entries is associated with an execution priority of 20. Job 418 is represented by queue elements in queues Qs0, Qs1 and Qs2. The number of queues in which to include a queue entry for job 418 may be determined pseudo-randomly as described above. Each of jobs 410-416 is represented by one queue entry in queue Qs0 and by no other queue entries. Usage of a single queue entry for each job to the left of job 418 may facilitate searching of the active skiplist after insertion of skiplist 500 into the active skiplist. Since all the identified jobs are associated with the same execution priority, the right-most queue elements of skiplist 500 may represent any job of the identified jobs.

Skiplist 500 may be generated by a single thread within unshared memory. Skiplist 500 may therefore be generated independently from concurrent usage of another skiplist located in shared memory to schedule jobs. Advantageously, generation of skiplist 500 should therefore not interfere with the access of other threads to a shared skiplist which is currently being used to schedule jobs.

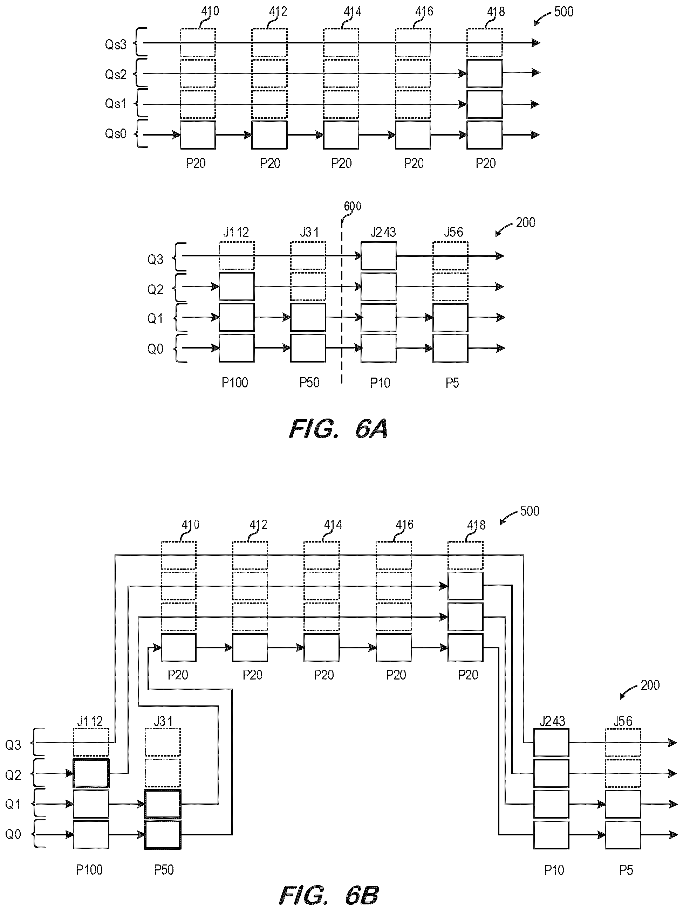

At S330, an insertion point is determined for each queue of a second skiplist based on the execution priority of the identified plurality of jobs. FIG. 6 illustrates skiplist 500 of FIG. 5A and example currently-active skiplist 200 of FIG. 2A. S330 may comprise determining an insertion point of skiplist 200 for jobs of execution priority 20.

The determination at S330 may proceed as described above with respect to FIGS. 2A and 2B. For example, the first queue interval of queue Q3 exists between a queue entry representing infinite priority and a queue entry for job J243, representing priority 10. Since the execution priority of the jobs of skiplist 500 is 20, it is initially determined to insert skiplist 500 somewhere between infinite priority and job J243.

Queue Q2 is then examined between a queue entry representing infinite priority and its queue entry representing job J243. The first encountered interval in queue Q2 is between the queue entry representing infinite priority and a queue entry representing job J112. Since the priority of Job J112 is 100, it is determined that jobs having priority 20 should not be inserted between the queue entry of queue Q2 representing infinite priority and the queue entry of queue Q2 representing job J112. The next encountered interval in queue Q2 is between the queue entry representing job J112 and the queue entry representing job J243. Since the priority of Job J112 is 100 and the priority of job J243 is 10, it is determined that skiplist 500 should be inserted somewhere between the queue entry representing job J112 and the queue entry representing job J243.

Next, queue Q1 is examined between its queue entry representing job J112 and its queue entry representing job J243. The first encountered interval in queue Q1 is between the queue entry representing job J112 and the queue entry representing job J31. Since the priority of Job J112 is 100 and the priority of job J31 is 50, it is determined that skiplist 500 should not be inserted between the queue entry representing job J112 and the queue entry representing job J31. The next encountered interval in queue Q1 is between the queue entry representing job J31 and the queue entry representing job J243. Since the priority of Job J31 is 50 and the priority of job J243 is 10, it is determined that skiplist 500 should be inserted somewhere between the queue entry representing Job J31 and the queue entry representing job J243.

Queue Q0 is examined between its queue entry representing job J31 and its queue entry representing job J24. Since only one interval exists between these entries, it is determined to insert skiplist 500 between the queue entries of job J31 and the queue entries of job J24. The determined insertion point for each of queues Q0-Q3 is denotes by dashed line 600 of FIG. 6A.

Next, at S340, the queues of the first skiplist are inserted into the queues of the second skiplist at the determined insertion points. The insertion may proceed as described above with respect to FIGS. 2A and 2B, and on a queue-by-queue basis.

Initially, the forward pointers of the Qs2, Qs1 and Qs0 queue entries for job 418 are set to point, respectively, to the Q2, Q1 and Q0 queue entries for job J243. In some embodiments, the insertion points are determined prior to generating the queue entries of the first skiplist (i.e., skiplist 500) so that the queue entries of the right-most job may be generated with forward pointers corresponding to the insertion point.

To insert queue Qs0 into queue Q0 at insertion point 600, the forward pointer of the queue Q0 queue entry which precedes the queue Q0 insertion point (i.e., the queue entry of job J31, shown in bold in FIG. 6B) is changed from the location of the queue Q0 queue entry of job J243 to the location of the queue Qs0 queue entry of job 410. As mentioned above, if the queue Q0 queue entry of job J31 has been marked for deletion, the insertion pauses until the physical deletion of the queue entry has occurred, and then the forward pointer of the queue Q0 queue entry of job J112 would be changed from the location of the queue Q0 queue entry of job J243 to the location of the queue Qs0 queue entry of job 410.

Similarly, to insert queue Qs1 into queue Q1 at insertion point 600, a pointer of the queue Q1 queue entry of job J31 (also shown in bold in FIG. 6B) is changed from the location of the queue Q1 queue entry of job J243 to the location of the queue Qs1 queue entry of job 418. Queue Qs2 is inserted into queue Q2 at insertion point 600 by changing the forward pointer of the queue Q2 queue entry of job J112 (shown in bold in FIG. 6B) from the location of the queue Q2 queue entry of job J243 to the location of the queue Qs2 queue entry of job 418. Since queue Qs3 includes no queue entries, no changes are made to queue Q3 of skiplist 200.

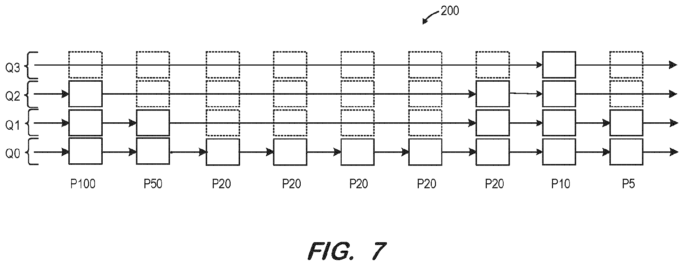

FIG. 7 illustrates skiplist 200 after insertion of skiplist 500. Skiplist 200 may be accessed by a thread pool to provide job scheduling as is known in the art. Two or more sub skiplists such as skiplist 500 may be concurrently generated in some embodiments by two threads working in parallel. One of the skiplists may include identified jobs having a first priority, while another of the skiplists may include identified jobs having a second priority. Each of the skiplists may be inserted into the currently-active skiplist as described above.

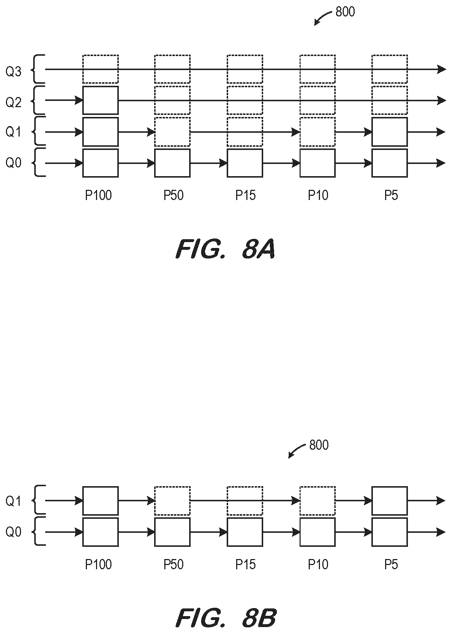

FIGS. 8A and 8B illustrate reduction of skiplist queues according to some embodiments. The present inventors have discovered the runtime cost of a skiplist varies with the number of skiplist queues. In particular, a greater number of skiplist queues result in a greater number of queue entries for a given number of jobs, and therefore a greater number of forward pointers which must be accessed and/or modified during insertion and removal of jobs. On the other hand, and up to a certain point, increasing the number of queues improves the speed at which a job insertion point may be identified. This point depends on the number of jobs in the skiplist.

In view of the foregoing, some embodiments periodically determine a preferred number of skiplist queues based on a current number of jobs in the skiplist. Accordingly, the preferred number changes as the number of jobs in the skiplist changes. If the number of queues exceeds the preferred number, queues are removed from the skiplist until the number of queues is equal to the preferred number. If the number of queues is less than the preferred number, queues are added to the skiplist.

In some embodiments, a minimum and maximum number of queues are periodically determined based on the current number of jobs in the skiplist. If the number of queues exceeds the maximum number, queues are removed from the skiplist until the number of queues is equal to the maximum number, or another number between the minimum and maximum numbers. If the number of queues is less than the minimum number, queues are added to the skiplist until the number of queues is equal to the minimum number, or another number between the minimum and maximum numbers.

Skiplist 800 of FIG. 8A includes four queues Q3-Q0 and five jobs. It will be assumed that it is determined, based on the five jobs, that skiplist 800 should include two queues. Based on the determination, any existing entries of queues Q2 and Q3 are deleted (e.g., by removing pointers thereto from their preceding queue entries (or entry), resulting in skiplist 800 of FIG. 8B.

The preferred number of queues may then increase based on the addition of jobs to skiplist 800. If so, queue entries for newly-received jobs are generated and may be stored in the additional queues as described above.

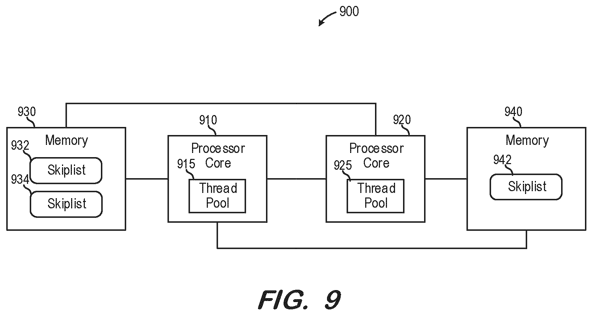

FIG. 9 is a block diagram of non-uniform memory access architecture 900 according to some embodiments. Architecture 900 includes processor cores 910 and 920, which may belong to a same CPU or to different CPUs. Each of processor cores 910 and 920 provides a respective one of thread pools 915, 925 including one or more execution threads. A single thread pool may be provided by any number of processors, for example within a NUMA node.

According to some embodiments, processor core 910 is able to access volatile memory 930 directly coupled to processor core 910 and volatile memory 940 directly coupled to processor core 920. Similarly, processor core 920 is able to access volatile memory 930 directly coupled to processor core 910 and volatile memory 940 directly coupled to processor core 920.

Skiplist 932 of memory 930 may comprise a global skiplist accessible to threads of thread pool 915 and thread pool 925. Skiplist 934, on the other hand, may be reserved for jobs to be performed exclusively by threads of threads pool 915. Similarly, skiplist 942 of memory 940 may be reserved for jobs to be performed exclusively by threads of threads pool 925. The foregoing arrangement provides beneficial management of job execution. Moreover, a sub skiplist including multiple identical-priority jobs may be added to any of skiplists 932, 934 and 942 as described above.

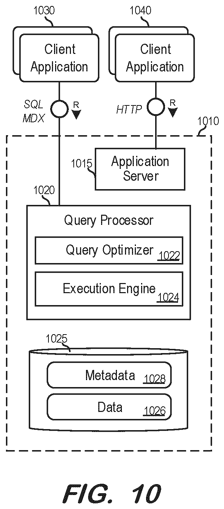

FIG. 10 is a block diagram of a database architecture which may support sub skiplist insertions according to some embodiments. Embodiments are not limited to the FIG. 10 architecture.

Server node 1010 may receive a query from one of client applications 1030 and 1040 and return results thereto based on data stored within server node 1010. Node 1010 executes program code to provide application server 1015 and query processor 1020. Application server 1015 provides services for executing server applications. For example, Web applications executing on application server 1015 may receive Hypertext Transfer Protocol (HTTP) requests from client applications 1040 as shown in FIG. 10.

Query processor 1020 may include stored data and engines for processing the data. Query processor 1020 may also be responsible for processing Structured Query Language (SQL) and Multi-Dimensional eXpression (MDX) statements and may receive such statements directly from client applications 1030.

Query processor 1020 includes query optimizer 1022 for use in determining query execution plans and execution engine 1024 for executing query execution plans against tables 1026 of storage 1025. Execution engine 1024 may comprise a request processor and a scheduler to insert queue entries in skiplist queues and manage skiplist queues as described herein.

In some embodiments, the data of storage 1025 may comprise one or more of conventional tabular data, row-stored data, column-stored data, and object-based data. Moreover, the data may be indexed and/or selectively replicated in an index to allow fast searching and retrieval thereof. Server node 1010 may support multi-tenancy to separately support multiple unrelated clients by providing multiple logical database systems which are programmatically isolated from one another.

Metadata 1028 includes data describing a database schema to which tables 1026 confirm. Metadata 1028 may therefore describe the columns and properties of tables 1026, the properties of each column of each table 1026, the interrelations between the columns, and any other suitable information. In one example, metadata 1028 may identify one or more columns of tables 1026 as dictionary-compressed and include information for locating the column dictionary and dictionary indices associated with each dictionary-compressed column.

Server node 1010 may implement storage 1025 as an "in-memory" database, in which a full database stored in volatile (e.g., non-disk-based) memory (e.g., Random Access Memory). The full database may be persisted in and/or backed up to fixed disks (not shown). Embodiments are not limited to an in-memory implementation. For example, data may be stored in random-access memory (e.g., cache memory for storing recently-used data) and one or more fixed disks (e.g., persistent memory for storing their respective portions of the full database).

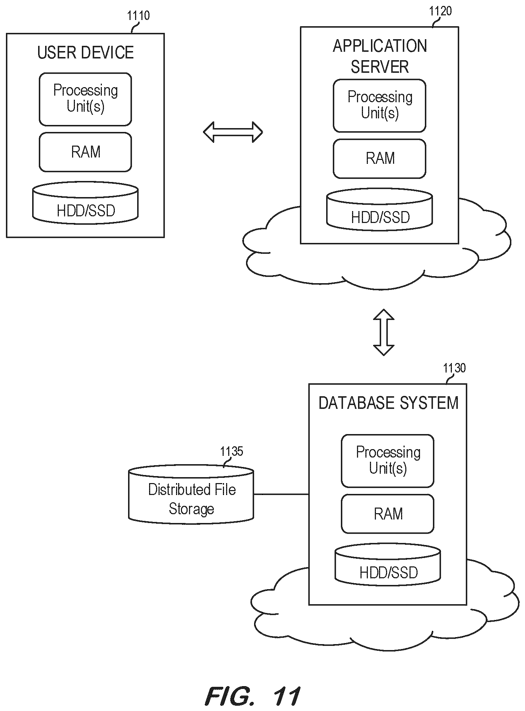

FIG. 11 illustrates a cloud-based database deployment according to some embodiments. The illustrated components may reside in one or more public clouds providing self-service and immediate provisioning, autoscaling, security, compliance and identity management features.

User device 1110 may interact with applications executing on application server 1120, for example via a Web Browser executing on user device 1110, in order to create, read, update and delete data managed by database system 1130 and persisted in distributed file storage 1135. Database system 1130 may store data and may execute processes as described herein to insert jobs into skiplists for execution by execution threads of database system 1130. Application server 1120 and/or database system 1130 may comprise cloud-based compute resources, such as virtual machines, allocated by a public cloud provider. As such, application server 1120 and database system 1130 may exhibit demand-based elasticity.

The foregoing diagrams represent logical architectures for describing processes according to some embodiments, and actual implementations may include more or different components arranged in other manners. Other topologies may be used in conjunction with other embodiments. Moreover, each component or device described herein may be implemented by any number of devices in communication via any number of other public and/or private networks. Two or more of such computing devices may be located remote from one another and may communicate with one another via any known manner of network(s) and/or a dedicated connection. Each component or device may comprise any number of hardware and/or software elements suitable to provide the functions described herein as well as any other functions. For example, any computing device used in an implementation described herein may include a programmable processor to execute program code such that the computing device operates as described herein.

All systems and processes discussed herein may be embodied in program code stored on one or more non-transitory computer-readable media. Such media may include, for example, a DVD-ROM, a Flash drive, magnetic tape, and solid state Random Access Memory or Read Only Memory storage units. Embodiments are therefore not limited to any specific combination of hardware and software.

Elements described herein as communicating with one another are directly or indirectly capable of communicating over any number of different systems for transferring data, including but not limited to shared memory communication, a local area network, a wide area network, a telephone network, a cellular network, a fiber-optic network, a satellite network, an infrared network, a radio frequency network, and any other type of network that may be used to transmit information between devices. Moreover, communication between systems may proceed over any one or more transmission protocols that are or become known, such as Asynchronous Transfer Mode (ATM), Internet Protocol (IP), Hypertext Transfer Protocol (HTTP) and Wireless Application Protocol (WAP).

Embodiments described herein are solely for the purpose of illustration. Those in the art will recognize other embodiments may be practiced with modifications and alterations to that described above.

## Claims

1. A system comprising:
a processing unit to execute processor-executable program code in order to cause the system to:
identify a plurality of computing jobs associated with a same execution priority;
generate a first skiplist including a first plurality of queues, the first skiplist including one or more queue entries for each of the plurality of computing jobs; and
insert each of the first plurality of queues of the first skiplist into respective ones of a second plurality of queues of a second skiplist at respective insertion points of the second plurality of queues.

2. A system according to Claim 1, further comprising:
a second processing unit to cause the system to:
access the second skiplist to determine a highest-priority computing job of the second skiplist; and
execute the determined highest-priority computing job;
wherein the system optionally comprises:
a first memory to store the first skiplist, the first memory not accessible to the second processing unit; and
a second memory to store the second skiplist, the second memory accessible to the first processing unit and the second processing unit.

3. A system according to Claim 1, wherein insertion of each of the first plurality of queues of the first skiplist into respective ones of the second plurality of queues of the second skiplist comprises:
for each of the second plurality of queues, determine a queue entry preceding a respective insertion point of the queue; and
in each of the determined queue entries, change a forward pointer to point to a first queue entry of a respective one of the first plurality of queues;
wherein the system optionally comprises:
a first memory to store the first skiplist, the first memory not accessible to the second processing unit; and
a second memory to store the second skiplist, the second memory accessible to the first processing unit and the second processing unit.

4. A system according to any one of Claims 1 to 3, the processing unit to execute the processor-executable program code in order to cause the system to:
determine a number of queues based on a number of computing jobs in the second skiplist; and
remove a first one or more queues of the second plurality of queues based on the determined number.

5. A system according to Claim 4, the processing unit to execute the processor-executable program code in order to cause the system to:
determine a second number of queues based on a second number of computing jobs in the second skiplist; and
add a second one or more queues to the second skiplist based on the determined second number.

6. A computer-implemented method comprising:
identifying a plurality of computing jobs associated with a same execution priority;
generating a first skiplist including a first plurality of queues, each of the first plurality of queues including a queue entry for at least one of the plurality of computing jobs;
determining an insertion point for each one of a second plurality of queues of a second skiplist based on the execution priority, each of the second plurality of queues including a queue entry for at least one of a second plurality of computing jobs; and
inserting each of the first plurality of queues of the first skiplist into a respective one of the second plurality of queues of a second skiplist at the determined insertion points.

7. A method according to Claim 6, wherein the identifying, generating, determining and inserting are performed by a first execution thread, the method further comprising:
executing a second execution thread to access the second skiplist to determine a highest-priority computing job of the second skiplist, and to execute the determined highest-priority computing job;
and preferably:
wherein the first execution thread generates the first skiplist in a local memory of the first execution thread, and
wherein the second skiplist is stored in a shared memory accessible to the first execution thread and to the second execution thread.

8. A method according to Claim 6 or 7, wherein inserting each of the first plurality of queues of the first skiplist into respective ones of the second plurality of queues comprises:
for each of the second plurality of queues, determining a queue entry preceding a respective insertion point of the queue; and
in each of the determined queue entries, changing a forward pointer to point to a first queue entry of a respective one of the first plurality of queues.

9. A method according to any one of Claims 6 to 8, wherein the first skiplist is generated in a local memory of an execution thread, and
wherein the second skiplist is stored in a shared memory.

10. A method according to any one of Claims 6 to 9, further comprising:
determining a number of queues based on a number of computing jobs in the second skiplist; and
removing a first one or more queues of the second plurality of queues based on the determined number; and/or
further comprising:
determining a second number of queues based on a second number of computing jobs in the second skiplist; and
adding a second one or more queues to the second skiplist based on the determined second number.

11. One or more non-transitory media storing processor-executable program code, the program code executable by a computing system to cause the computing system to:
identify a plurality of computing jobs associated with a same execution priority;
determine an insertion point for each one of a second plurality of queues of a second skiplist based on the execution priority, each of the second plurality of queues including a queue entry for at least one of a second plurality of computing jobs; and
generate a first skiplist including a first plurality of queues, the first skiplist including one or more queue entries for each of the plurality of computing jobs; and
insert each of the first plurality of queues of the first skiplist into a respective one of the second plurality of queues at a respective one of the determined insertion points.

12. One or more non-transitory media according to Claim 11, the program code executable by a computing system to cause the computing system to:
access the second skiplist to determine a highest-priority computing job of the second skiplist; and
execute the determined highest-priority computing job.

13. One or more non-transitory media according to Claim 11 or 12, wherein the first skiplist is stored in a local memory and the second skiplist is stored in a shared memory.

14. One or more non-transitory media according to any one of Claims 11 to 13, wherein insertion of each of the first plurality of queues of the first skiplist into a respective one of the second plurality of queues comprises:
for each of the second plurality of queues, determine a queue entry preceding a respective insertion point of the queue; and
in each of the determined queue entries, change a forward pointer to point to a first queue entry of a respective one of the first plurality of queues.

15. One or more non-transitory media according to any one of Claims 11 to 14, the program code executable by a computing system to cause the computing system to:
determine a number of queues based on a number of computing jobs in the second skiplist; and
remove a first one or more queues of the second plurality of queues based on the determined number;
and preferably the program code executable by a computing system to cause the computing system to:
determine a second number of queues based on a second number of computing jobs in the second skiplist; and
add a second one or more queues to the second skiplist based on the determined second number.
